# EUROPEAN PATENT APPLICATION

(11) **EP 4 600 303 A1**
(43) Date of publication of application: **13.08.2025**
(21) Application number: 24156199.2
(22) Date of filing: 07.02.2024
(51) Int. Cl.: C08L 67/02

(54) **FLAME RETARDANT AND LIGHT TRANSMISSIVE CRYSTALLINE POLYMER COMPOSITIONS AND ARTICLES**

(71) Applicant: SHPP Global Technologies B.V., 4612 PX Bergen op Zoom (NL)
(72) Inventor: CHENG, Yunan, Shanghai (CN); WANG, Jian, Shanghai (CN); ZHENG, Yun, Shanghai (CN)
(74) Representative: Modiano, Gabriella Diana

(57) **Abstract**

Polymer composition include: (a) from about 10 wt% to about 86 wt% of at least one crystalline polymer; (b) from about 3 wt% to about 40 wt% of at least one amorphous polymer, wherein the amorphous polymer has a refractive index value greater than that of the crystalline polymer; (c) from about 10 wt% to about 70 wt% of a reinforcing filler; and (d) from about 0.1 wt% to about 20 wt% of a phosphorous or brominated flame retardant additive. The polymer composition exhibits a light transmission greater than 40% at a thickness of 1 mm when tested using UV-VIS-IR transmission at 980 nm. A molded sample including the polymer composition exhibits a flame performance of at least V2 at a thickness of 1.5 mm or less when tested in accordance with UL94.

## Description

### FIELD OF THE DISCLOSURE

The present disclosure relates to materials exhibiting light transmission properties and flame retardant performance, and in particular to materials exhibiting light transmission properties and flame retardant performance for laser welding applications.

### BACKGROUND OF THE DISCLOSURE

Flame retardant (FR) crystalline materials containing fiber reinforcements have been widely used as structural components in many mobility and electronics applications because of the balance of properties offered. These materials generally balance flame performance and chemical resistance while maintaining desirable flow and mechanical properties. However, conventional reinforced FR crystalline materials are typically light opaque. Making such materials light transmissive could make them more suitable for high speed high precision laser welding, improving production efficiency and design flexibility. Increasing demand for electric vehicles has increased demand for components that can balance FR performance and laser light transmission to replace existing metal components. There remains a need in the art for reinforced FR crystalline materials with light transmission properties.

These and other shortcomings are addressed by aspects of the present disclosure.

### SUMMARY

Aspects of the disclosure relate to polymer compositions including: (a) from about 10 wt% to about 86 wt% of at least one crystalline polymer; (b) from about 3 wt% to about 40 wt% of at least one amorphous polymer, wherein the amorphous polymer has a refractive index value greater than that of the crystalline polymer; (c) from about 10 wt% to about 70 wt% of a reinforcing filler; and (d) from about 0.1 wt% to about 20 wt% of a phosphorous or brominated flame retardant additive. The polymer composition exhibits a light transmission greater than 40% at a thickness of 1 mm when tested using UV-VIS-IR transmission at 980 nm. A molded sample including the polymer composition exhibits a flame performance of at least V2 at a thickness of 1.5 mm when tested in accordance with UL94.

### DETAILED DESCRIPTION

The present disclosure may be understood more readily by reference to the following detailed description of desired aspects and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, electric vehicles.

Fiber-filled flame retardant (FR) crystalline materials have been widely used in many electronics applications. These materials provide a balance of flame performance and chemical resistance while also maintaining desirable flow and mechanical properties. These properties are particularly desirable in the electric automotive field as electric vehicle (EV) manufacturers are developing new powertrain systems that include new components such as EV inverters, Insulated-Gate Bipolar Transistors (IGBTs), and thermal management systems. These components desirably exhibit such a balance of properties. Given their properties, reinforced FR crystalline materials are suitable for these components and further offer weight reduction and the potential of high-speed, high precision laser welding in processing - considerations which are unavailable for the existing metal-based variations of the components. Conventional reinforced FR crystalline materials however are generally opaque (not sufficiently laser transparent for welding). Matching the refractive index (RI) of composition matrix and including a phosphorous or brominated flame retardant additive provides compositions with improved light transmission properties. The compositions are useful in EV powertrain and many other industries requiring FR laser weldable crystalline blends.

Polymer compositions of the present disclosure address these shortcomings. The disclosed compositions provide crystalline polymer blends with flame retardancy (FR) and light transmission properties. The disclosed polymer compositions may include from about 10 wt% to about 86 wt% of at least one crystalline polymer; from about 3 wt% to about 40 wt% of at least one amorphous polymer, wherein the amorphous polymer has a refractive index value greater than that of the crystalline polymer as measured using a refractometer; from about 10 wt% to about 70 wt% of a reinforcing filler; and from about 0.1 wt% to about 20 wt% of a phosphorous or brominated flame retardant additive. The combined weight percent value of all components does not exceed 100 wt%, and all weight percent values are based on the total weight of the polymer composition.

To meet desired EV components specifications for laser welding and flame performance, the polymer compositions may exhibit a light transmission greater than 40% at a thickness of 1 mm when tested using UV-VIS-IR transmission at 980 nm, and a molded sample including the polymer composition exhibits a flame performance of at least V-2 at a thickness of 1.5 mm as tested in accordance with UL94. In further aspects the polymer composition exhibits a flame performance of V-2, V-1 or V-0 at a thickness of 1.5 mm, or at a thickness of 1.2 mm, or at a thickness of 1.0 mm, or at a thickness of 0.8 mm, when tested in accordance with UL94.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of aspects described in the specification.

### Polymer Composition

Aspects of the disclosure relate to a polymer composition including at least one crystalline polymer, at least one amorphous polymer, a reinforcing filler, and a phosphorous or brominated flame retardant additive. The at least one amorphous polymer may have a refractive index greater than that of the crystalline polymer.

In some aspects, the crystalline polymer includes a crystalline polyester such as polybutylene terephthalate (PBT). The PBT component may include PBT homopolymers, PBT copolymers, or a combination thereof. The crystalline polymer may include a first crystalline polyester and a second crystalline polyester having particular intrinsic viscosities.

In further aspects, the at least one amorphous polymer includes a polyetherimide (PEI). PEI refers to polymers and/or copolymers containing ether and optionally substituted imide functional groups in the backbone of the polymer.

The reinforcing filler may include a glass fiber.

The flame retardant additive may include phosphorous flame retardant additives or brominated flame retardant additives.

Compositions according to aspects of the disclosure may have improved properties as compared to comparative compositions that do not include the amorphous polymer and/or the phosphorous or brominated FR additive.

A 1 mm thick molded sample including the polymer composition may exhibit a light transmission greater than 40% when tested using UV-VIS-IR transmission at 980 nm. A molded sample including the polymer composition may exhibit a flame performance of at least V-2, or V-1, or V-0 at a thickness of 1.5 mm, or 1.2 mm, or 1.0 mm, or 0.8 mm, when tested in accordance with UL94. A molded sample including the polymer composition may exhibit a warpage of less than 0.1, or less than 0.05, or less than 0.02, at a thickness of 1.2 mm. A molded sample including the polymer composition may exhibit a moisture value of less than 0.2, or less than 0.1, or less than 0.05 at 23 °C when tested in accordance with ISO 62 at 23 °C in water for 24 hours.

### Crystalline or Semi-Crystalline Polymer

In various aspects, the disclosed composition may include at least one crystalline or semi-crystalline polyester. Crystallinity, or semi-crystallinity, of a polymer may describe a polymer having molecular chains that are organized or more tightly packed. A result, this highly organized molecular structure may provide a more a defined melting point. These polymers are anisotropic in flow, so they exhibit greater shrinkage transverse to flow rather than with the flow, which can sometimes result in some dimensional instability. There can be varying degrees of crystallinity among different materials and as well as variations among of the same material. The degree of crystallinity can affect many characteristics of the polymer. Molecular weight and branching may affect crystallinity.

The at least one crystalline or semi-crystalline polyester includes polybutylene terephthalate (PBT), polycyclohexylene dimethylene terephthalate (PCT), polyethylene terephthalate (PET), polyethylene terephthalate glycol (PETG), polycyclohexylene dimethylene terephthalate glycol (PCTG), polycyclohexylene dimethylene terephthalate acid (PCTA), copolymers thereof, or a combination thereof. In a particular aspect the at least one crystalline or semi-crystalline polyester includes polybutylene terephthalate (PBT).

In a particular aspect, the at least one crystalline or semi-crystalline polyester includes polybutylene terephthalate (PBT). PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives thereof. Commercial examples of PBT include those available under the trade names VALOX^{™} 315, VALOX^{™} 195 and VALOX^{™} 176, manufactured by SABIC^{™}, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C.

In certain aspects, the crystalline or semi-crystalline polyester may have a refractive index value that is less than the refractive index of the at least one amorphous polymer present in the composition. As a specific example, the crystalline or semi-crystalline polyester may have a refractive index that is less than the refractive index of a polyetherimide where polyetherimide is included as the amorphous polymer. The crystalline or semi-crystalline polyester may have a refractive index that is at least 1%, at least 2%, at least 5%, at least 10%, at least 15%, or at least 20% less than the refractive index of the amorphous polymer. The amorphous polymer may have refractive index higher than that of the crystalline polymer. In some aspects, the amorphous resin may have refractive index higher than 1.5, or greater than 1.55, or greater than 1.6.

In certain aspects, the crystalline or semi-crystalline polyester may have a refractive index value that is less than the refractive index of the reinforcing filler present in the composition. As a specific example, the crystalline or semi-crystalline polyester may have a refractive index that is less than the refractive index of glass where glass filler is included as the reinforcing filler. The crystalline or semi-crystalline polyester may have a refractive index that is at least 1%, at least 2%, at least 5%, at least 10%, at least 15%, or at least 20% less than the refractive index of glass or glass filler or a glass fiber filler. The amorphous resin may have refractive index higher than that of the reinforcing filler (e.g., glass) in certain aspects.

As described herein, the composition may include from about 10 wt% to about 86 wt% of a crystalline or semi-crystalline polyester. In further examples, the composition may include at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at most 86 wt%, or at most 83 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, of the crystalline or semi-crystalline polyester.

### Amorphous Resin

In an aspect, the polymer composition may include a combination of at least one crystalline or semi-crystalline polyester and an amorphous resin. An amorphous polymer resin may describe a polymer resin have a randomly ordered molecular structure and may lack a discrete melting point. Such amorphous materials may gradually soften as temperature increases. The amorphous resin is often characterized according to its glass transition temperature, T_{g}. While crystalline and to some extent semi-crystalline polymers exhibit organized and tightly packed molecular chains, the polymer chains for amorphous plastics are more disorganized.

The composition may include from about 3 wt% to about 40 wt% of an amorphous resin. In certain aspects the composition includes at least 3 wt%, or at least 5 wt%, or at least 8 wt%, or at least 10 wt%, or at least 12 wt%, or at least 15 wt%, or at least 18 wt%, or at least 20 wt%, or at least 22 wt%, or at least 25 wt%, or at least 28 wt%, or at least 30 wt%, or at most 40 wt%, or at most 38 wt%, or at most 35 wt%, or at most 32 wt%, or at most 30 wt%, or at most 28 wt%, or at most 25 wt%, or at most 22 wt%, or at most 20 wt%, or at most 18 wt%, or at most 15 wt%, or at most 12 wt%, or at most 10 wt%, of the amorphous resin. In further aspects the composition includes from 3-40 wt%, or from 5-30 wt%, or from 10-30 wt%, or from 10-20 wt%, of the amorphous resin.

In certain aspects, the amorphous resin may have a refractive index value that is greater than the refractive index of the reinforcing filler present in the composition. As a specific example, the amorphous resin may have a refractive index that is higher than the refractive index of glass where glass filler is employed as the reinforcing filler. The amorphous resin may have a refractive index that is at least 1%, at least 2%, at least 5%, at least 10%, at least 15%, or at least 20% greater than the refractive index of glass or glass filler or a glass fiber filler. The amorphous resin may have refractive index higher than that of glass. In some aspects, the amorphous resin may refractive index higher than 1.5, or greater than 1.55, or greater than 1.6.

In certain aspects the amorphous resin includes a polyetherimide (PEI), a polycarbonate (PC), a polyphenylene ether (PPE), a polyphenylene oxide (PPO), copolymers thereof, or a combination thereof.

In specific aspects the amorphous polymer includes PEI, which are amorphous, transparent, high performance polymers having a glass transition temperature ("T_{g}") of greater than 180 °C. In an aspect, polyetherimides can include polyetherimides homopolymers (for example, polyetherimidesulfones) and polyetherimide copolymers. The polyetherimide can be selected from (i) polyetherimide homopolymers, e.g., polyetherimides, (ii) polyetherimide co-polymers, and (iii) combinations thereof. Polyetherimides are known polymers and are sold by SABIC under the ULTEM^{™}, EXTEM^{™}, and SILTEM^{™} brands.

In an aspect, the polyetherimides can be of formula (1): 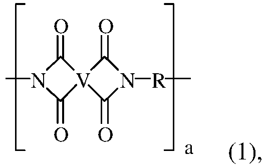 wherein a is more than 1, for example 10 to 1,000 or more, or more specifically 10 to 500.

The group V in formula (1) is a tetravalent linker containing an ether group (a "polyetherimide" as used herein) or a combination of an ether groups and arylenesulfone groups (a "polyetherimidesulfone"). Such linkers include but are not limited to: (a) substituted or unsubstituted, saturated, unsaturated or aromatic monocyclic and polycyclic groups having 5 to 50 carbon atoms, optionally substituted with ether groups, arylenesulfone groups, or a combination of ether groups and arylenesulfone groups; and (b) substituted or unsubstituted, linear or branched, saturated or unsaturated alkyl groups having 1 to 30 carbon atoms and optionally substituted with ether groups or a combination of ether groups, arylenesulfone groups, and arylenesulfone groups; or combinations including at least one of the foregoing. Suitable additional substitutions include, but are not limited to, ethers, amides, esters, and combinations including at least one of the foregoing.

The R group in formula (1) includes but is not limited to substituted or unsubstituted divalent organic groups such as: (a) aromatic hydrocarbon groups having 6 to 20 carbon atoms and halogenated derivatives thereof; (b) straight or branched chain alkylene groups having 2 to 20 carbon atoms; (c) cycloalkylene groups having 3 to 20 carbon atoms, or (d) divalent groups of formula (2): 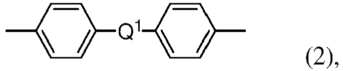 wherein Q1 includes but is not limited to a divalent moiety such as -O-, -S-, -C(O)-, -SO2-, - SO-, -CyH2y- (y being an integer from 1 to 5), and halogenated derivatives thereof, including perfluoroalkylene groups.

### Reinforcing Filler

In various aspects, the composition includes a reinforcing filler. Suitable reinforcing filler components may include for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations including at least one of the foregoing fillers or reinforcing agents. The fillers and reinforcing agents may be coated with a layer of metallic material to facilitate conductivity, or surface treated, with silanes for example, to improve adhesion and dispersion with the polymer matrix. In various aspects, the selected reinforcing filler may exhibit a refractive index lower than that of the amorphous resin, and/or higher than that of the crystalline or semi-crystalline polymer employed in the present disclosure.

In specific aspects, suitable reinforcing filler includes glass, such as glass fibers. In some examples, the glass fiber may be selected from E-glass, S-glass, AR-glass, T-glass, D-glass, R-glass, and combinations thereof. In some examples, the glass fibers may include E-glass (modulus below 85 GPa), S-glass (modulus above 85GPa), low Dk glass (Dk less than 5 or Df less than 0.002, or including at least 90% the combination of silicon dioxide and boron oxide), or a combination thereof.

The E-glass may refer to a glass fiber having a tensile modulus 70-85 GPa and/or a tensile strength 2-4 GPa. The E-glass may also refer to a glass fiber including 52-62 wt% silicon dioxide, 12-16 wt% aluminum oxide, 16-25 wt% calcium oxide, 0~10 wt% boron oxide, 0-5 wt% magnesium oxide, and 0-5 wt% other components.

The S-glass may refer to a glass fiber having tensile modulus above 85 GPa, tensile strength above 4 GPa. The S-glass may also refer to a glass fiber including 57-70 wt% silicon dioxide, 18-30 wt% aluminum oxide, 0-10 wt% calcium oxide, 0-5 wt% boron oxide, 7-15 wt% magnesium oxide, and 0-5 wt% other components.

The glass fibers used in select aspects of this disclosure may be surface-treated with a surface treatment agent containing a coupling agent to improve adhesion to the polymer base resin. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo-metallic coupling agents, for example, titanium or zirconium-based organo-metallic compounds, may also be used.

The glass fiber may have a variety of shapes. The glass fiber may include milled or chopped glass fibers. The glass filler may be in the form of whiskers or flakes. In further examples, the glass fiber may be short glass fiber or long glass fiber. Low dielectric constant glass fibers having a length of about 4 mm or longer are referred as to long fibers, and fibers shorter than this are referred to as short fibers. In one aspect, the diameter of the glass fibers can be about 10 µm.

The glass fibers may have a circular cross section, or a non-circular cross section, or a mixture of the above. The non-circular cross section may have an axial ratio in the range of 1.5 to 8, or more specifically 3 to 5. In a yet further aspect, the diameter of the glass fiber is from about 1 to about 15 µm. More specifically, the diameter of the glass fiber may be from about 4 to about 10 µm.

In some aspects, the composition can include from about 10 wt% to about 70 wt% of the reinforcing filler based on the total weight of the polymer composition. In further aspects, the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, or at most 20 wt%, or at most 15 wt%, of the reinforcing filler. In other aspects, the composition includes from 10-60 wt%, or from 10-50 wt%, or from 20-50 wt% of the reinforcing filler.

### Phosphorous or brominated flame retardant additive

In certain aspects the phosphorous flame retardant additive includes a metal phosphinate, including but not limited to aluminum phosphinate, melamine polyphosphate (MPP), or a combination thereof. An exemplary aluminum phosphinate is aluminum diethylphosphinate (ADP), which has the following chemical structure:

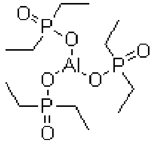

MPP has the following chemical structure:

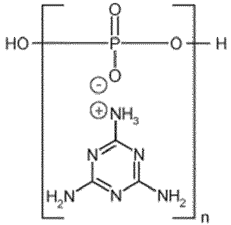

In certain aspect the phosphorous flame retardant additive includes both ADP and MPP. In particular aspects the ADP and MPP are included in phosphorous FR additive in a form of a pre-blended FR composition. The pre-blended FR composition may be added to the other components of the composition in the pre-blended form, i.e., without separately adding ADP and MPP to the other components of the composition.

In certain aspects the brominated flame retardant additive includes a tetrabromobisphenol A (TBBA). TBBA has the following chemical structure:

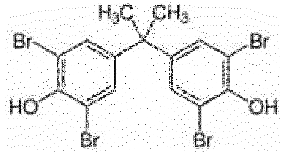

In some aspects the flame retardant additive includes both a phosphorous and a brominated flame retardant additive.

In certain aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1.0 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at least 16 wt%, or at least 17 wt%, or at least 18 wt%, or at least 19 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1.5 wt%, of the phosphorous or brominated flame retardant additive. In further aspects the composition includes from 1-20 wt%, or from 1-15 wt%, or from 1-10 wt%, or from 5-15 wt%, or from 5-20 wt%, or from 10-15 wt%, or from 10-20 wt%, of the phosphorous or brominated flame retardant additive.

### Additives

The disclosed polymer composition can include one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, mold release agent, anti-microbial agents, anti-drip agents, radiation stabilizers, pigments, dyes, fibers, fillers, plasticizers, fibers, flame retardants, antioxidants, lubricants, wood, glass, metals, colorants, and combinations thereof.

In certain aspects the composition includes from about 0.01 wt% to about 5 wt% of one or more additional additives. In further aspects the composition includes at least 0.1 wt%, or at least 0.2 wt%, or at least 0.3 wt%, or at least 0.4 wt%, or at least 0.5 wt%, or at least 0.6 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, or at most 1 wt%, or at most 0.9 wt%, or at most 0.8 wt%, or at most 0.7 wt%, or at most 0.6 wt%, or at most 0.5 wt%, or at most 0.4 wt%, of the one or more additional additives.

In specific aspects the one or more additional additive includes an ultraviolet stabilizer (e.g., a benzotriazole stabilizer), a mold release agent (e.g., pentaerythritol tetrastearate), an antioxidant (e.g., antioxidant 1010), a heat stabilizer (e.g., a phosphite stabilizer), an anti-drip agent (e.g., styrene-acrylonitrile copolymer (SAN) encapsulated polytetrafluoroethylene (PTFE), referred to as TSAN), or a combination thereof.

### Properties and Articles

In certain aspects, the disclosed composition may exhibit certain flame retardant and optical transmission properties. The polymer composition may exhibit a higher light transmission value than the light transmission value observed for a reference composition in the absence of the amorphous resin as determined by UV-VIS-IR method. The composition exhibits improved warpage and water moisture, as determined in accordance with a disclosed method as compared to a comparative composition that does not include the amorphous polymer and/or the phosphorous or brominated flame retardant additive.

Plaques molded from the disclosed composition may exhibit optical transmission properties. With an increasing focus on laser welding assembly of electric vehicle components, the demand for high transmission materials has similarly increased. Percent Transmission as described herein may be measured by a UV-VIS-IR transmission method. For example, a molded sample may exhibit higher transmission value at 900-1100 nm wavelength, which is the range of the laser applications, as compared to a reference composition that does not include the amorphous polymer. In some examples, transmission is observed at 980 nm wavelengths. The polymer composition exhibits a light transmission of at least 40%, or at least 42%, or at least 45%, or at least 48%, or at least 50%, or at least 52%, or at least 55%, or at least 58%, or at least 60%, or at least 62%, or at least 65%, or at least 68%, or at least 70%, at a thickness of 1 mm when tested using UV-VIS-IR transmission at 980 nm.

Plaques molded from the disclosed composition may exhibit warpage properties. Warpage can be defined as a dimensional distortion in a molded product after it is ejected from the mold at the end of the injection molding process. With an increasing focus on thin-walled products, control over the dimensional stability becomes increasingly important. For example, a molded sample may exhibit lower warpage value in terms of both average value and standard deviation, as determined using the above method, as compared to a comparative composition that does not include the amorphous polymer. In further aspects, warpage may be determined by observing the magnitude (visually or quantitatively) of lift off away from a planar surface at which a molded part including the composition is placed.

Warpage may be evaluated on a molded sample disk having 135 mm diameter and 1.2 mm thickness according to a SABIC Method, in which: a disk is placed on a flat surface and four points (A, B, C, D) are marked equidistantly along the disk edge; one point D is pressed into the surface elevating the remaining points along the disk edge; the magnitude of the distance of each point A, B, and C to the flat surface is obtained to provide the warpage; and average value and standard deviation of warpage A, B and C is calculated.

Thus, in some aspects a molded sample of the composition exhibits a lower warpage than the warpage observed for a reference molded sample that does not include the amorphous resin, wherein warpage is determined according to the SABIC Method. In specific aspects a molded sample including the polymer composition may exhibit a warpage of less than 0.1, or less than 0.05, or less than 0.02, at a thickness of 1.2 mm, as determined according to the SABIC Method.

A molded sample including the polymer composition exhibits a flame performance of at least V2 at a thickness of 1.5 mm when tested in accordance with UL94. In further aspects a molded sample including the polymer composition exhibits a flame performance of V-2, V-1 or V-0 at a thickness of 1.5 mm, or at a thickness of 1.2 mm, or at a thickness of 1.0 mm, or at a thickness of 0.8 mm, when tested in accordance with UL94.

In certain aspects the polymer composition exhibits a moisture value less than 0.2% when tested in accordance with ISO 62 at 23 °C in water for 24 hours. In other aspects the polymer composition exhibits a moisture value of less than 0.19%, or less than 0.18%, or less than 0.17%, or less than 0.16%, or less than 0.15%, or less than 0.14%, or less than 0.13%, or less than 0.12%, or less than 0.11%, or less than 0.10%, or less than 0.09%, or less than 0.08%, or less than 0.07%, or less than 0.06%, or less than 0.05%, or less than 0.04%, or less than 0.03%, when tested in accordance with ISO 62 at 23 °C in water for 24 hours.

In various aspects, the present disclosure relates to articles including the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good flatness, good microwave transmission and optical transmission properties. The advantageous characteristics of the compositions disclosed herein make them appropriate for an array of uses. In various aspects, the present disclosure provides materials useful for the manufacture of enclosures that can transmit microwave electromagnetic energy. Further disclosed herein are radar sensor components (plates, enclosures, covers, for example) manufactured from these materials, and articles (sensors, cameras, ECUs) manufactured from these components.

### Methods of Manufacture

Aspects of the disclosure further relate to methods for making a polymer composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the polymer compositions. The melt blending of the components involves the use of shear force, extensional force, compressive force, ultrasonic energy, electromagnetic energy, thermal energy or combinations including at least one of the foregoing forces or forms of energy. The barrel temperature on the extruder during compounding may be set at the temperature where at least a portion of the polymer has reached a temperature greater than or equal to about the melting temperature, if the resin is a crystalline or semi-crystalline organic polymer, or the flow point (for example, the glass transition temperature) if the resin is an amorphous resin.

The mixture including the foregoing mentioned components may be subject to multiple blending and forming steps if desirable. For example, the polymer composition may first be extruded and formed into pellets. The pellets may then be fed into a molding machine where it may be formed into any desirable shape or product. Alternatively, the polymer composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350 °C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further include processing the composition to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein. As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

In one aspect, "substantially free of" may refer to less than 0.5 wt% or less than about 0.5 wt% present in a given composition or component. In another aspect, substantially free of can be less than 0.1 wt%, or less than about 0.1 wt%. In another aspect, substantially free of can be less than 0.01 wt%, or less than about 0.01 wt%. In yet another aspect, substantially free of can be less than 100 parts per million (ppm), or less than about 100 ppm. In yet another aspect, substantially free can refer to an amount, if present at all, below a detectable level. Substantially free of or free of may further refer to a component that has not been added or incorporated into the composition. For example, the compositions may be free of or substantially free of impact modifier.

In the present application the conventional understanding of "crystalline", "semi-crystalline" and "amorphous" polymers is used. For example, crystalline polymers are identified as having very high crystallinities (e.g., 95-99%). Crystalline polymers are rigid and have high melting temperatures. They are less affected by solvent penetration. Semi-crystalline polymers may have both crystalline and amorphous regions. Semi-crystalline polymers combine the strength of crystalline polymers with the flexibility of amorphous polymers. Semi-crystalline polymers may be tough with an ability to bend without breaking. Amorphous polymers have polymer chains with branches or irregular groups that cannot pack together regularly enough to form crystals. Amorphous regions of a polymer are made up of a randomly coiled and entangled chains; they softer and have lower melting points than crystalline and semi-crystalline polymers.

As used herein the terms "weight percent," "wt.%," and "wt%," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.

Aspect 1. A polymer composition comprising:
a. from about 10 wt% to about 86 wt% of at least one crystalline polymer;
b. from about 3 wt% to about 40 wt% of at least one amorphous polymer,
   wherein the amorphous polymer has a refractive index value greater than that of the crystalline polymer, wherein refractive index is measured using a refractometer;
c. from about 10 wt% to about 70 wt% of a reinforcing filler; and
d. from about 0.1 wt% to about 20 wt% of a phosphorous or brominated flame retardant additive, wherein

the combined weight percent value of all components does not exceed 100 wt% and all weight percent values are based on the total weight of the polymer composition,
the polymer composition exhibits a light transmission greater than 40% at a thickness of 1 mm when tested using UV-VIS-IR transmission at 980 nm, and
a molded sample comprising the polymer composition exhibits a flame performance of at least V2 at a thickness of 1.5 mm when tested in accordance with UL94.

Aspect 2. The polymer composition of Aspect 1, wherein the crystalline polymer comprises a crystalline polyester.

Aspect 3. The polymer composition of Aspect 1, wherein the crystalline polymer comprises a polybutylene terephthalate.

Aspect 4. The polymer composition of any one of Aspects 1-3, wherein the at least one amorphous polymer comprises a polyetherimide.

Aspect 5. The polymer composition of Aspect 4, wherein the composition comprises from about 5 wt% to about 30 wt% of the polyetherimide, or optionally from about 10 wt% to about 30 wt% of the polyetherimide.

Aspect 6. The polymer composition of any one of Aspects 1-5, wherein the at least one amorphous polymer has a refractive index greater than a refractive index of the reinforcing filler when measured using a refractometer.

Aspect 7. The polymer composition of any one of Aspects 1-6, wherein the reinforcing filler comprises glass fiber.

Aspect 8. The polymer composition of Aspect 7, wherein the glass fiber is a flat glass fiber.

Aspect 9. The polymer composition of any one of Aspects 1-8, wherein the phosphorous flame retardant additive comprises an aluminum diethylphosphinate (ADP), a melamine polyphosphate (MPP), or a combination thereof.

Aspect 10. The polymer composition of any one of Aspects 1-9, wherein the brominated flame retardant additive comprises tetrabromobisphenol A (TBBA).

Aspect 11. The polymer composition of any one of Aspects 1-10, wherein the polymer composition further comprises at least one additional additive.

Aspect 12. The polymer composition of Aspect 11, wherein the at least one additional additive comprises an acid scavenger, antioxidant, antistatic agent, chain extender, colorant, de-molding agent, flow promoter, lubricant, mold release agent, plasticizer, quenching agent, flame retardant, UV reflecting additive, or a combination thereof.

Aspect 13. The polymer composition of any one of Aspects 1-12, wherein the polymer composition exhibits a moisture value less than 0.2% when tested in accordance with ISO 62 at 23 °C in water for 24 hours.

Aspect 14. The polymer composition of any one of Aspects 1-13, wherein the polymer composition exhibits a warpage of less than 0.1 inch when tested on a molded sample disk having a diameter of 135 mm and a thickness of 1.2 mm.

Aspect 15. An article comprising the polymer composition of any of Aspects 1 to 14.

Aspect 16. The article of Aspect 15, wherein the article is a component of an electric vehicle (EV).

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%. There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various glass-filled PBT composition samples were prepared to evaluate refractive index matching of the composition and establish light transparency. Components used in one or more of the compositions described herein are listed in Table 1-1:

**Table 1-1. Components**

| **Component** | **Description** |
|---|---|
| PBT195 | Polybutylene terephthalate PBT VX195 (RI 1.52∼1.54) |
| PBT315 | Polybutylene terephthalate PBT VX315 (RI 1.52∼1.54) |
| PEI | Polyetherimide PEI Ultem^{™} 1010 (RI 1.63∼1.65) |
| GF | Glass fiber Nittobo CSG 3PA-830 (RI 1.55∼1.57) |
| OP 1230 | Phosphorous FR ADP, Clariant Exolit OP 1230 |
| OP 1240 | Phosphorous FR ADP, Clariant Exolit OP 1240 |
| Phos FR | Phosphorous FR mix (preblended ADP and MPP), Liside LFR 5005 |
| OP 1312 | Phosphorous FR mix (preblended ADP and MPP), Clariant Exolit OP 1312 |
| TBBA | Brominated FR, TBBA, Great Lake Chemical BC58 |
| TBBA mix | Brominated FR mix (TBBA and Sb₂O₃) |
| TSAN | Styrene-acrylonitrile encapsulated polytetrafluoroethylene anti-drip |
| BTA | Benzotriazole stabilizer |
| PETS | Pentaerythritol tetrastearate |
| AO1010 | Antioxidant 1010 |
| Phos stab | Phosphite stabilizer |

Table 1-2 shows glass-filled PBT compositions (30 wt% glass fiber). These formulations included amorphous resin PEI, which had a refractive index RI of about 1.63 to 1.65 (a value higher than that of glass or glass fiber) when observed using a refractometer (Abbe refractometer or Metricon Model 2010 Prism Coupler) at room temperature. Control compositions C1.1 to C1.5 included PBT blends having a RI of 1.52 to about 1.54, which is lower than that of glass, but did not include one or both of PEI and a phosphorous or brominated flame retardant.

**Table 1-2. 30 wt% glass filled FR PBT Compositions**

| **Component** | **Unit** | **C1.1** | **C1.2** | **C1.3** | **C1.4** | **C1.5** | **E1.1** | **E1.2** | **E1.3** |
|---|---|---|---|---|---|---|---|---|---|
| PBT195 | % | 35 | 28.45 | 28 | 28 | 25 | 18.45 | 18.45 | 18.15 |
| PBT315 | % | 34.35 | 27.9 | 28.35 | 28.35 | 24.35 | 17.9 | 17.9 | 17.9 |
| PEI | % | | | | | 20 | 20 | 20 | 20 |
| GF | % | 30 | 30 | 30 | 30 | 30 | 30 | 30 | 30 |
| OP 1230 | % | | 13 | | | | 13 | | |
| TBBA | % | | | 13 | | | | 13 | 13 |
| TBBA mix | % | | | | 13 | | | | |
| TSAN | % | | | | | | | | 0.3 |
| BTA | % | 0.25 | 0.25 | 0.25 | 0.25 | 0.25 | 0.25 | 0.25 | 0.25 |
| PETS | % | 0.2 | 0.2 | 0.2 | 0.2 | 0.2 | 0.2 | 0.2 | 0.2 |
| AO1010 | % | 0.1 | 0.1 | 0.1 | 0.1 | 0.1 | 0.1 | 0.1 | 0.1 |
| Phos stab | % | 0.1 | 0.1 | 0.1 | 0.1 | 0.1 | 0.1 | 0.1 | 0.1 |
| Total | % | 100 | 100 | 100 | 100 | 100 | 100 | 100 | 100 |

**Table 1-3a. Properties of Table 1-2 Compositions**

| **Test Property** | **Test Description** | **Test Method** | **Unit** | **C1.1** | **C1.2** | **C1.3** | **C1.4** |
|---|---|---|---|---|---|---|---|
| Transmission | 980nm, 1mm thick | UV-VIS-IR transmission | % | 47 | 28 | 35 | 21 |
| Transmission | 980nm, 2mm thick | | % | 25 | 11 | 16 | 8 |
| Transmission | 980nm, 3mm thick | | % | 13 | 4 | 7 | 2 |
| UL94 vertical burn rating* | 1.5mm | UL Vx | | HB | V2 | V2 | V0 |
| | 1.5mm, aged | | | HB | V2 | V1 | V0 |
| Total flame time of 5 specimens | 1.5mm | | s | >250 | 130 | 166 | 14 |
| | 1.5mm, aged | | s | >250 | 174 | 107 | 14 |
| Number of burning drops, 1.5mm | | | | >20 | 3 | 19 | 0 |
| Number of burning drops, 1.5mm aged | | | | >20 | 19 | 0 | 0 |
| Moisture | 23°C, water, 24hours | ISO62 | % | 0.2 | 0.2 | 0.2 | 0.2 |
| Warpage-Avg. | 1.2mm thick | 135mm disc | Inch | 0.1 | 0.1 | 0.1 | 0.1 |
| Warpage-StdDev. | 1.2mm thick | 135mm disc | Inch | 0.03 | 0.03 | 0.03 | 0.03 |
| Notched impact | -20°C | ASTM D256 | J/m | 114 | 100 | 115 | 100 |
| Notched impact | 23°C | ASTM D256 | J/m | 124 | 100 | 115 | 100 |
| Unotched impact | 23°C | ASTM D256 | J/m | 1080 | 500 | 490 | 360 |
| Flexural modulus | 1.3mm/min | ASTM D790 | MPa | 8360 | 8860 | 9330 | 9730 |
| Flexural strength | yield 1.3mm/min | ASTM D790 | MPa | 212 | 175 | 195 | 190 |
| Tensile modulus | 5mm/min | ASTM D638 | MPa | 8387 | 11050 | 11705 | 12020 |
| Tensile strength | break 5mm/min | ASTM D638 | MPa | 132 | 120 | 140 | 130 |
| Tensile elongation | break 5mm/min | ASTM D638 | % | 2.8 | 2.2 | 2.5 | 2.2 |

**Table 1-3b. Properties of Table 1-2 Compositions**

| **Test Property** | **Test Description** | **Test Method** | **Unit** | **C1.5** | **E1.1** | **E1.2** | **E1.3** |
|---|---|---|---|---|---|---|---|
| Transmission | 980nm, 1mm thick | UV-VIS-IR transmission | % | 78 | 51 | 55 | 51 |
| Transmission | 980nm, 2mm thick | | % | 63 | 32 | 38 | 30 |
| Transmission | 980nm, 3mm thick | | % | 49 | 21 | 25 | 16 |
| UL94 vertical burn rating* | 1.5mm | UL Vx | | HB | V1 | V2 | V2 |
| | 1.5mm, aged | | | HB | V1 | V2 | V2 |
| Total flame time of 5 specimens | 1.5mm | | s | >250 | 47 | 94 | 65 |
| | 1.5mm, aged | | s | >250 | 53 | 75 | 60 |
| Number of burning drops, 1.5mm | | | | >20 | 0 | 2 | 1 |
| Number of burning drops, 1.5mm aged | | | | >20 | 0 | 3 | 2 |
| Moisture | 23°C, water, 24hours | ISO62 | % | 0.02 | 0.02 | 0.05 | 0.05 |
| Warpage-Avg. | 1.2mm thick | 135mm disc | Inch | 0.01 | 0.01 | 0.01 | 0.01 |
| Warpage-StdDev. | 1.2mm thick | 135mm disc | Inch | 0.00 | 0.00 | 0.00 | 0.00 |
| Notched impact | -20°C | ASTM D256 | J/m | 123 | 80 | 100 | 93 |
| Notched impact | 23°C | ASTM D256 | J/m | 150 | 90 | 110 | 97 |
| Unotched impact | 23°C | ASTM D256 | J/m | 1030 | 650 | 870 | 800 |
| Flexural modulus | 1.3mm/min | ASTM D790 | MPa | 8720 | 9970 | 9390 | 9460 |
| Flexural strength | yield 1.3mm/min | ASTM D790 | MPa | 198 | 180 | 215 | 225 |
| Tensile modulus | 5mm/min | ASTM D638 | MPa | 8706 | 10920 | 11435 | 11545 |
| Tensile strength | break 5mm/min | ASTM D638 | MPa | 130 | 120 | 150 | 160 |
| Tensile elongation | break 5mm/min | ASTM D638 | % | 2.6 | 2.1 | 2.8 | 2.8 |

| | | | | | | | |
|---|---|---|---|---|---|---|---|
| *UL94 vertical burn rating: 1) total flame time of 5 specimens ≤50s, no cotton indicator ignition by flaming particles, V0. 2) total flame time of 5 specimens ≤250s, no cotton indicator ignition by flaming particles, V1. 3) total flame time of 5 specimens ≤250s, cotton indicator ignited by flaming particles, V2. | | | | | | | |

Properties of the Table 1-2 compositions are provided in Tables 1-3a and 1-3b. Optical transmission was determined using UV-VIS-IR spectrometer (Shimadzu UV-3510) at 980 nanometers (nm). Flame performance was measured in accordance with UL94; the standard for V0, V1 and V2 ratings is provided above. Warpage was evaluated on a molded sample disk having 135 mm diameter and 1.2 mm thickness according to a SABIC Method according to the following description: the disk was placed on a flat surface and four points (A, B, C, D) were marked equidistantly along the disk edge; one point D was pressed into the surface elevating the remaining points along the disk edge; the magnitude of the distance of each point A, B, and C to the flat surface was obtained to provide the warpage; and average value and standard deviation of warpage A, B and C was calculated.

Composition C1.2 including a phosphorous FR component but without an amorphous polymer (i.e., PEI) exhibited lower transmission T% than that of example composition E1.1 which included PEI. Composition C1.3 including a brominated FR component but without an amorphous polymer PEI exhibit lower transmission T% than that of example composition E1.2 which included PEI. The results in Tables 1-3a and Table 1-3b also show that the use of a phosphorus FR component or a brominated FR component resulted in higher transmission than a composition including a brominated FR mix system. A further combination of poly(tetrafluoroethylene) (PTFE) encapsulated in styrene-acrylonitrile copolymer (SAN), namely TSAN, as flame retardant anti-drip agent (E1.3) does not substantially affect optical transmission.

Additional compositions were prepared as shown in Table 2-1; properties are shown in Table 2-2:

**Table 2-1. Compositions with various phosphorous additives**

| **Component** | **Unit** | **E2.1** | **E2.2** | **E2.3** |
|---|---|---|---|---|
| PBT195 | % | 18.45 | 18.45 | 18.45 |
| PBT315 | % | 18.15 | 18.15 | 18.15 |
| PEI | % | 20 | 20 | 20 |
| GF | % | 30 | 30 | 30 |
| OP 1240 | % | 13 | | |
| Phos FR | % | | 13 | |
| OP 1312 | | | | 13 |
| PETS | % | 0.2 | 0.2 | 0.2 |
| AO1010 | % | 0.1 | 0.1 | 0.1 |
| Phos stab | % | 0.1 | 0.1 | 0.1 |
| Total | % | 100 | 100 | 100 |

**Table 2-2. Properties of compositions with various phosphorous additives**

| **Test Property** | **Test Description** | **Test Method** | **Unit** | **E2.1** | **E2.2** | **E2.3** |
|---|---|---|---|---|---|---|
| Transmission | 980nm, 1mm thick | UV-VIS-IR transmission | % | 49 | 42 | 40 |
| Transmission | 980nm, 2mm thick | | % | 32 | 24 | 19 |
| Transmission | 980nm, 3mm thick | | % | 19 | 12 | 8 |
| UL94 vertical burn rating | 1.5mm | UL Vx | | V0 | V0 | V0 |
| | 1.5mm, aged | | | V0 | V0 | V0 |
| Total flame time of 5 specimens | 1.5mm | | s | 26 | 19 | 20 |
| | 1.5mm, aged | | s | 33 | 17 | 17 |
| Number of burning drops, 1.5mm | | | | 0 | 0 | 0 |
| Number of burning drops, 1.5mm aged | | | | 0 | 0 | 0 |
| Moisture | 23°C, water, 24hours | ISO 62 | % | 0.02 | 0.02 | 0.02 |
| Notched impact | -20°C | ASTM D256 | J/m | 85 | 85 | 80 |
| Notched impact | 23°C | ASTM D256 | J/m | 90 | 95 | 85 |
| Unotched impact | 23°C | ASTM D256 | J/m | 675 | 785 | 520 |
| Flexural modulus | 1.3mm/min | ASTM D790 | MPa | 9960 | 10000 | 10100 |
| Flexural strength | yield 1.3mm/min | ASTM D790 | MPa | 180 | 190 | 155 |
| Tensile modulus | 5mm/min | ASTM D638 | MPa | 11035 | 11245 | 11305 |
| Tensile strength | break 5mm/min | ASTM D638 | MPa | 120 | 125 | 110 |
| Tensile elongation | break 5mm/min | ASTM D638 | % | 2.3 | 2.3 | 1.9 |

Table 2-2 showed that the phosphorous flame retardant additive can include a single chemistry (e.g., ADP), or a mixed chemistry such as a combination of ADP and MPP. Additionally, the FR additive may be pre-blended. From the data it was observed that a single chemistry or single compound FR additive (E2.1) resulted in compositions having a higher transmission than those including a multiple agent phosphorous FR system (E2.2 and E2.3), although all compositions had a light transmission of at least 40% at 1 mm.

Samples were also prepared to assess the effect of FR loading on transmission and other properties. Compositions are shown in Table 3-1 and their properties are shown in Table 3-2a and Table 3-2b:

**Table 3-1. Compositions containing various FR loadings**

| **Component** | **Unit** | **E3.1** | **E3.2** | **E3.3** | **E3.4** | **E3.5** | **E3.6** | **E3.7** |
|---|---|---|---|---|---|---|---|---|
| PBT195 | % | 24.45 | 22.95 | 21.35 | 19.85 | 19.55 | 17.45 | 14.95 |
| PBT315 | % | 24.15 | 22.65 | 21.15 | 19.65 | 19.65 | 17.15 | 14.65 |
| PEI | % | 20 | 20 | 20 | 20 | 20 | 20 | 20 |
| GF | % | 30 | 30 | 30 | 30 | 30 | 30 | 30 |
| OP 1240 | % | 1 | 4 | | | | 15 | 20 |
| OP 1230 | % | | | 7 | 10 | 10 | | |
| TSAN | % | | | | | 0.3 | | |
| PETS | % | 0.2 | 0.2 | 0.2 | 0.2 | 0.2 | 0.2 | 0.2 |
| AO1010 | % | 0.1 | 0.1 | 0.1 | 0.1 | 0.1 | 0.1 | 0.1 |
| Phos stab | % | 0.1 | 0.1 | 0.1 | 0.1 | 0.1 | 0.1 | 0.1 |
| Total | % | 100 | 100 | 100 | 100 | 100 | 100 | 100 |

**Table 3-2a. Properties from various FR loadings**

| **Test Property** | **Test Description** | **Test Method** | **Unit** | **E3.1** | **E3.2** | **E3.3** | **E3.4** |
|---|---|---|---|---|---|---|---|
| Transmission | 980nm, 1mm thick | UV-VIS-IR transmission | % | 78 | 73 | 63 | 55 |
| UL94 vertical burn rating | 1.5mm | UL Vx | | V2 | V2 | V2 | V1 |
| | 1.5mm, aged | | | V2 | V2 | V2 | V2 |
| Total flame time of 5 specimens | 1.5mm | | s | 145 | 96 | 89 | 73 |
| | 1.5mm, aged | | s | 145 | 79 | 51 | 68 |
| Number of burning drops, 1.5mm | | | | 20 | 14 | 7 | 0 |
| Number of burning drops, 1.5mm aged | | | | 20 | 13 | 10 | 9 |
| UL94 vertical burn rating | 1.2mm | UL Vx | | V2 | V2 | V2 | V2 |
| | 1.2mm, aged | | | V2 | V2 | V0 | V1 |
| Total flame time of 5 specimens | 1.2mm | | s | 85 | 78 | 36 | 79 |
| | 1.2mm, aged | | s | 117 | 74 | 33 | 58 |
| Number of burning drops, 1.2mm | | | | 20 | 19 | 10 | 6 |
| Number of burning drops, 1.2mm aged | | | | 18 | 19 | 0 | 0 |
| UL94 vertical burn rating | 1.0mm | UL Vx | | V2 | V2 | \ | \ |
| | 1.0mm, aged | | | V2 | V2 | \ | \ |
| Total flame time of 5 specimens | 1.0mm | | s | 118 | 64 | \ | \ |
| | 1.0mm, aged | | s | 95 | 53 | \ | \ |
| Number of burning drops, 1.0mm | | | | 20 | 18 | \ | \ |
| Number of burning drops, 1.0mm aged | | | | 20 | 20 | \ | \ |
| Moisture | 23°C, water, 24hours | ISO 62 | % | 0.02 | 0.02 | 0.02 | 0.02 |
| Notched impact | 23°C | ASTM D256 | J/m | 80 | 85 | \ | 100 |
| Unotched impact | 23°C | ASTM D256 | J/m | 470 | 530 | \ | 488 |
| Flexural modulus | 1.3mm/min | ASTM D790 | MPa | 8890 | 9360 | \ | 10400 |
| Flexural strength | yield 1.3mm/min | ASTM D790 | MPa | 166 | 195 | \ | 180 |
| Tensile modulus | 5mm/min | ASTM D638 | MPa | 10975 | 11295 | \ | 10985 |
| Tensile strength | break 5mm/min | ASTM D638 | MPa | 122 | 122 | \ | 130 |
| Tensile elongation | break 5mm/min | ASTM D638 | % | 2.0 | 2.1 | \ | 2.2 |

**Table 3-2b. Properties from various FR loadings**

| **Test Property** | **Test Description** | **Test Method** | **Unit** | **E3.5** | **E3.6** | **E3.7** |
|---|---|---|---|---|---|---|
| Transmission | 980nm, 1mm thick | UV-VIS-IR transmission | % | 52 | 50 | 43 |
| UL94 vertical burn rating | 1.5mm | UL Vx | | V1 | V0 | V0 |
| | 1.5mm, aged | | | V1 | V0 | V0 |
| Total flame time of 5 specimens | 1.5mm | | s | 51 | 35 | 35 |
| | 1.5mm, aged | | s | 83 | 37 | 26 |
| Number of burning drops, 1.5mm | | | | 0 | 0 | 0 |
| Number of burning drops, 1.5mm aged | | | | 0 | 0 | 0 |
| UL94 vertical burn rating | 1.2mm | UL Vx | | V1 | V1 | V1 |
| | 1.2mm, aged | | | V1 | V1 | V1 |
| Total flame time of 5 specimens | 1.2mm | | s | 79 | 70 | 67 |
| | 1.2mm, aged | | s | 92 | 71 | 62 |
| Number of burning drops, 1.2mm | | | | 0 | 0 | 0 |
| Number of burning drops, 1.2mm aged | | | | 0 | 0 | 0 |
| UL94 vertical burn rating | 1.0mm | UL Vx | | \ | V1 | V1 |
| | 1.0mm, aged | | | \ | V1 | V1 |
| Total flame time of 5 specimens | 1.0mm | | s | \ | 86 | 61 |
| | 1.0mm, aged | | s | \ | 64 | 54 |
| Number of burning drops, 1.0mm | | | | \ | 0 | 0 |
| Number of burning drops, 1.0mm aged | | | | \ | 0 | 0 |
| Moisture | 23°C, water, 24hours | ISO 62 | % | 0.02 | 0.02 | 0.02 |
| Notched impact | 23 °C | ASTM D256 | J/m | 100 | 90 | 90 |
| Unotched impact | 23°C | ASTM D256 | J/m | 550 | 630 | 450 |
| Flexural modulus | 1.3mm/min | ASTM D790 | MPa | 10600 | 10300 | 10900 |
| Flexural strength | yield 1.3mm/min | ASTM D790 | MPa | 195 | 195 | 170 |
| Tensile modulus | 5mm/min | ASTM D638 | MPa | 11470 | 12280 | 13050 |
| Tensile strength | break 5mm/min | ASTM D638 | MPa | 125 | 135 | 125 |
| Tensile elongation | break 5mm/min | ASTM D638 | % | 2.1 | 2.5 | 2.1 |

Table 3-2a and Table 3-2b show that compositions including 1-20 wt% of the FR additive provided a UL94 FR rating of V2 to V0 rating at a thickness of 1.5mm, a V2 to V1 rating at a thickness of 1.2 mm, V2 to V1 rating at a thickness of 1.0 mm, and a light transmission above 40% at 980 nm and a 1 mm thickness. 1-15 wt% of the FR additive gave a V2 to V0 rating at 1.5 mm and a light transmission above 50%. 1-10 wt% of the FR additive gave a V2 to V0 rating at 1.5 mm and a light transmission above 55%. 10-20 wt% of the FR additive provided improved FR performance, i.e., a V1 to V0 rating at 1.5 mm and a light transmission 40-55%. Composition E3.5 included an anti-drip agent (TSAN). It was further observed that the including the anti-drip agent did not significantly affect light transmission (see example E3.4 vs E3.5).

Additional compositions were prepared to evaluate the effect of an amorphous polymer (PEI) on the filled PBT compositions. The compositions and their properties are shown in Table 4-1 and 4-2, respectively.

**Table 4-1. Compositions containing various PEI loading**

| **Component** | **Unit** | **C4.1** | **E4.2** | **E4.3** |
|---|---|---|---|---|
| PBT195 | % | 26.95 | 23.45 | 16.35 |
| PBT315 | % | 26.65 | 23.15 | 16.25 |
| PEI | % | 3 | 10 | 30 |
| GF | % | 30 | 30 | 30 |
| OP 1240 | % | 13 | 13 | 7 |
| PETS | % | 0.2 | 0.2 | 0.2 |
| AO1010 | % | 0.1 | 0.1 | 0.1 |
| Phos stab | % | 0.1 | 0.1 | 0.1 |
| Total | % | 100 | 100 | 100 |

**Table 4-2. Properties from various PEI loading**

| **Test Property** | **Test Description** | **Test Method** | **Unit** | **C4.1** | **E4.2** | **E4.3** |
|---|---|---|---|---|---|---|
| Transmission | 980nm, 1mm thick | UV-VIS-IR transmission | % | 28 | 45 | 52 |
| UL94 vertical burn rating* | 1.5mm | UL Vx | | V1 | V1 | V1 |
| | 1.5mm, aged | | | V1 | V1 | V0 |
| Total flame time of 5 specimens | 1.5mm | | s | 84 | 63 | 52 |
| | 1.5mm, aged | | s | 79 | 77 | 46 |
| Number of burning drops, 1.5mm | | | | 0 | 0 | 0 |
| Number of burning drops, 1.5mm aged | | | | 0 | 0 | 0 |
| UL94 vertical burn rating | 1.0mm | UL Vx | | V2 | V1 | \ |
| | 1.0mm, aged | | | V2 | V2 | \ |
| Total flame time of 5 specimens | 1.0mm | | s | 100 | 82 | \ |
| | 1.0mm, aged | | s | 57 | 56 | \ |
| Number of burning drops, 1.0mm | | | | 1 | 0 | \ |
| Number of burning drops, 1.0mm aged | | | | 6 | 5 | \ |
| UL94 vertical burn rating | 0.8mm | UL Vx | | V2 | V2 | \ |
| | 0.8mm, aged | | | V2 | V2 | \ |
| Total flame time of 5 specimens | 0.8mm | | s | 115 | 78 | \ |
| | 0.8mm, aged | | s | 54 | 70 | \ |
| Number of burning drops, 0.8mm | | | | 1 | 1 | \ |
| Number of burning drops, 0.8mm aged | | | | 11 | 5 | \ |
| Moisture | 23°C, water, 24hours | ISO 62 | % | 0.02 | 0.02 | 0.02 |
| Notched impact | 23°C | ASTM D256 | J/m | 99 | 101 | 92 |
| Unotched impact | 23°C | ASTM D256 | J/m | 610 | 760 | 430 |
| Flexural modulus | 1.3mm/min | ASTM D790 | MPa | 9700 | 9910 | 10200 |
| Flexural strength | yield 1.3mm/min | ASTM D790 | MPa | 190 | 200 | 175 |
| Tensile modulus | 5mm/min | ASTM D638 | MPa | 11810 | 11970 | 10970 |
| Tensile strength | break 5mm/min | ASTM D638 | MPa | 120 | 135 | 120 |
| Tensile elongation | break 5mm/min | ASTM D638 | % | 2.2 | 2.4 | 1.9 |

As previously observed in Tables 1-2, 1-3a and 1-3b, inclusion of an amorphous polymer (PEI) was shown to increase certain properties (for example, FR performance) and decrease others (moisture, warpage). The results of Table 2-1 and Table 2-2 demonstrated that inclusion of PEI increased optical transmission, and reduced warpage. Good mechanical properties were also observed using PEI.

The results in Tables 4-1 and 4-2 (E4.2 and E4.3) similarly demonstrate that amorphous PEI increased the optical transmission, increased flame retardant properties, lowered moisture and has good mechanical properties as compared to C1.2. However C4.1 including 3% of PEI did not increase light transmission as compared to C1.2; both were 28% at 980 nm at a 1mm thickness. Accordingly, the suggested PEI range to provided balanced FR and light transmission would be higher than 3%, for example 5-30 wt%, or in some aspects 10-30 wt% or even 10-20 wt%.

Formulations with different glass fiber loadings were prepared and tested as shown in Tables 5-1 and 5-2. The RI of the amorphous resin (PEI) was higher than that of the chopped glass fiber.

**Table 5-1. Compositions containing various glass loading**

| **Component** | **Unit** | **E5.1** | **E5.2** | **E5.3** |
|---|---|---|---|---|
| PBT195 | % | 28.45 | 23.45 | 13.45 |
| PBT315 | % | 28.15 | 23.15 | 13.15 |
| PEI | % | 20 | 20 | 10 |
| GF | % | 10 | 20 | 50 |
| OP 1240 | % | 13 | 13 | 7 |
| PETS | % | 0.2 | 0.2 | 0.2 |
| AO1010 | % | 0.1 | 0.1 | 0.1 |
| Phos stab | % | 0.1 | 0.1 | 0.1 |
| Total | % | 100 | 100 | 100 |

**Table 5-2. Properties from various glass loading**

| **Test Property** | **Test Description** | **Test Method** | **Unit** | **E5.1** | **E5.2** | **E5.3** |
|---|---|---|---|---|---|---|
| Transmission | 980nm, 1mm thick | UV-VIS-IR transmission | % | 46 | 67 | 60 |
| UL94 vertical burn rating* | 1.5mm | UL Vx | | V0 | V1 | V0 |
| | 1.5mm, aged | | | V2 | V2 | V1 |
| Total flame time of 5 specimens | 1.5mm | | s | 38 | 55 | 33 |
| | 1.5mm, aged | | s | 25 | 40 | 72 |
| Number of burning drops, 1.5mm | | | | 0 | 0 | 0 |
| Number of burning drops, 1.5mm aged | | | | 3 | 6 | 0 |
| UL94 vertical burn rating | 0.8mm | UL Vx | | V2 | V2 | V1 |
| | 0.8mm, aged | | | V2 | V2 | V1 |
| Total flame time of 5 specimens | 0.8mm | | s | 22 | 62 | 83 |
| | 0.8mm, aged | | s | 16 | 32 | 78 |
| Number of burning drops, 0.8mm | | | | 9 | 8 | 0 |
| Number of burning drops, 0.8mm aged | | | | 15 | 14 | 0 |
| Moisture | 23°C, water, 24hours | ISO 62 | % | 0.05 | 0.04 | 0.02 |
| Notched impact | 23 °C | ASTM D256 | J/m | 43 | 83 | 117 |
| Unotched impact | 23 °C | ASTM D256 | J/m | 430 | 685 | 470 |
| Flexural modulus | 1.3mm/min | ASTM D790 | MPa | 5010 | 7450 | 17400 |
| Flexural strength | yield 1.3mm/min | ASTM D790 | MPa | 135 | 170 | 225 |
| Tensile modulus | 5mm/min | ASTM D638 | MPa | 5785 | 8720 | 20320 |
| Tensile strength | break 5mm/min | ASTM D638 | MPa | 88 | 115 | 145 |
| Tensile elongation | break 5mm/min | ASTM D638 | % | 2.8 | 2.7 | 1.7 |

The results in Table 5 (E5.1 to E5.3) demonstrate that 10-50 wt% of glass fiber provided the compositions with a light transmission above 40% at 980 nm and a thickness of 1 mm. With the same loading of PEI, i.e. 20% wt%, increasing glass fiber from 10 wt% (E5.1) to 20 wt% (E5.2) increased light transmission from 46% to 67%. Further increasing glass fiber content to 30 wt% (E1.1, E2.1) decreased light transmission to 49%-51%, although it was still above 40%. Further increasing glass fiber content to 50 wt% with less PEI (E5.3) provided the composition with a light transmission of 60%, indicating that it may be possible to increase glass fiber content to maintain the light transmission at 40% or higher. Accordingly, a suggested glass fiber range to provide 40% or higher light transmission would be 10-60 wt%, or in further aspects 10-50 wt% or even 20-50 wt%. Compositions including this range of glass fiber can have balanced light transmission and good mechanical properties and processing capabilities.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A polymer composition comprising:
a. from about 10 wt% to about 86 wt% of at least one crystalline polymer;
b. from about 3 wt% to about 40 wt% of at least one amorphous polymer,
wherein the amorphous polymer has a refractive index value greater than that of the crystalline polymer, wherein refractive index is measured using a refractometer;
c. from about 10 wt% to about 70 wt% of a reinforcing filler; and
d. from about 0.1 wt% to about 20 wt% of a phosphorous or brominated flame retardant additive, wherein
the combined weight percent value of all components does not exceed 100 wt% and all weight percent values are based on the total weight of the polymer composition,
the polymer composition exhibits a light transmission greater than 40% at a thickness of 1 mm when tested using UV-VIS-IR transmission at 980 nm, and
a molded sample comprising the polymer composition exhibits a flame performance of at least V2 at a thickness of 1.5 mm when tested in accordance with UL94.

2. The polymer composition of claim 1, wherein the crystalline polymer comprises a crystalline polyester.

3. The polymer composition of claim 1, wherein the crystalline polymer comprises a polybutylene terephthalate.

4. The polymer composition of any one of claims 1-3, wherein the at least one amorphous polymer comprises a polyetherimide.

5. The polymer composition of claim 4, wherein the composition comprises from about 10 wt% to about 30 wt% of the polyetherimide.

6. The polymer composition of any one of claims 1-5, wherein the at least one amorphous polymer has a refractive index greater than a refractive index of the reinforcing filler when measured using a refractometer.

7. The polymer composition of any one of claims 1-6, wherein the reinforcing filler comprises glass fiber.

8. The polymer composition of claim 7, wherein the glass fiber is a flat glass fiber.

9. The polymer composition of any one of claims 1-8, wherein the phosphorous flame retardant additive comprises an aluminum diethylphosphinate (ADP), a melamine polyphosphate (MPP), or a combination thereof.

10. The polymer composition of any one of claims 1-9, wherein the brominated flame retardant additive comprises tetrabromobisphenol A (TBBA).

11. The polymer composition of any one of claims 1-10, wherein the polymer composition further comprises at least one additional additive.

12. The polymer composition of claim 11, wherein the at least one additional additive comprises an acid scavenger, antioxidant, antistatic agent, chain extender, colorant, de-molding agent, flow promoter, lubricant, mold release agent, plasticizer, quenching agent, flame retardant, UV reflecting additive, or a combination thereof.

13. The polymer composition of any one of claims 1-12, wherein the polymer composition exhibits a moisture value less than 0.2% when tested in accordance with ISO 62 at 23 °C in water for 24 hours.

14. The polymer composition of any one of claims 1-13, wherein the polymer composition exhibits a warpage of less than 0.1 inch when tested on a molded sample disk having a diameter of 135 mm and a thickness of 1.2 mm.

15. An article comprising the polymer composition of any of claims 1 to 14, wherein the article is a component of an electric vehicle (EV).
